# EUROPÄISCHE PATENTSCHRIFT

(11) **EP 4 070 410 B1**
(45) Veröffentlichungstag und Bekanntmachung des Hinweises auf die Patenterteilung: **01.04.2026**
(21) Anmeldenummer: 20812370.3
(22) Anmeldetag: 02.12.2020
(51) Int. Cl.: H01Q 1/12, H01Q 13/08

(54) **FAHRZEUGSCHEIBE**
VEHICLE WINDOW
VITRE DE VÉHICULE

(30) Priorität: 05.12.2019 EP 19213751
(43) Veröffentlichungstag der Anmeldung: 12.10.2022
(73) Patentinhaber: Saint-Gobain Sekurit France, 60150 Thourotte (FR)
(72) Erfinder: GUTH, Adrien, 52064 Aachen (DE); FRANCOIS, Guillaume, 52064 Aachen (DE); PETITDIDIER, Guillaume, 92100 Boulogne-Billancourt (FR); RAMESH KUMAR, Varun, 52064 Aachen (DE)
(74) Vertreter: Gebauer, Dieter Edmund
(86) Internationale Anmeldenummer: PCT/EP2020/084200
(87) Internationale Veröffentlichungsnummer: WO 2021/110713

(56) Entgegenhaltungen:
- DE-A1- 102011 004 316
- US-A- 5 872 542
- US-A1- 2019 165 447

## Beschreibung

Fahrzeuge werden zunehmend mit elektrischen Komponenten ausgestattet. Neben klassischen Radiogeräten finden sich in zunehmender Anzahl Geräte in einem Fahrzeug wieder, die Hochfrequenzsignale empfangen oder auch senden können. Beispielhaft sei an dieser Stelle der Empfang von Signalen eines Kommunikationssystems angeführt. Kommunikationssysteme können z.B. Nahbereichsfunksysteme für Car-to-Car oder Car-to-Infrastructure oder auch Mobilfunkkommunikationssysteme, z.B. Mobilkommunikationssysteme der 2. / 3. / 4. oder 5. Generation sein.

Da Fahrzeuge häufig größere Metallflächen aufweisen, werden Hochfrequenzsignale hierdurch abgeschirmt, sodass der Empfang (als auch das Senden - soweit vorgesehen) erschwert wird. Zwar können entsprechende Antennen außen am Fahrzeug befestigt werden, jedoch stellen solche zusätzlichen Einrichtungen in mehrfacher Hinsicht ein Problem dar. Beispielhafte Anordnungen sind aus der US 20140176374 A1 bekannt. Zum einen erfordern die entsprechenden Einrichtungen Durchbrüche, die anfällig gegen Korrosion sind. Zum anderen stören solche Einrichtungen häufig den optischen Eindruck. Häufig stellen solche Einrichtungen aber auch eine Geräuschquelle als auch einen erhöhten Windwiderstand bereit. Zudem sind solche Antennen auch Ziel von Vandalismus.

Beispielsweise werden "Haifischflossen"-artige Antennen auf Dächern bereitgestellt. Dabei wirkt z.B. das Fahrzeugdach als Reflektor bzw. Erdfläche. In aller Regel werden hierfür sogenannte Patch-Antennen verwendet. Diese weisen typischerweise eine rechteckige bis quadratische Form auf, wobei ein in etwa gleichartiger Groundlayer als Antennengegengewicht unterhalb der Patch-Antenne angeordnet ist.

Ausgehend hiervon hat sich in der Vergangenheit ein Trend dahin entwickelt, Antennen an anderen Orten bereitzustellen. Beispielsweise können Antennen innerhalb des Fahrzeuginnenraums angeordnet werden, beispielsweise unterhalb des Armaturenbretts oder unterhalb der Windschutzscheibe. Dabei ist es schwierig, eine geeignete Position mit guter Sicht der Antenne auf die Sender zu finden und gleichzeitig EMC-Probleme durch elektrische Geräte im Armaturenbrett und durch den Fahrzeugmotor zu vermeiden. Weiterhin stellt die mechanische Integration hohe Anforderungen an Dichtigkeit (z.B. gegenüber Feuchtigkeit) und Zuverlässigkeit von Kabelführungen.

Andererseits besteht das Bedürfnis, so wenig wie möglich das Blickfeld durch eine Scheibe zu beeinträchtigen. Daher werden z.B. Sensoren am Rand der Scheibe, bevorzugt im Bereich eines Schwarzdruckes angeordnet.

Aus US 2019 / 0165447 A1 ist eine Vivaldiantenne gemäß dem Oberbegriff von Patentanspruch 1 bekannt. Die dort gezeigten Vivaldiantennen sind für den Empfang von Signalen eines globalen satellitengestützen Navigationssystems optimiert. Trotz Breitbandigkeit sind die Antennen für den Mehrbandempfang nur unzureichend. Zudem benötigen die dort vorgestellten Antennen einen relativ großen Platz, sodass der Platzierung enge Grenzen gesetzt sind.

Aus US 2008 / 129619 A1 ist eine oberflächenmontierbare Antenne zum Empfang von polarisierten Signalen bekannt. Die dort gezeigte Antenne benötigt jedoch viel Fläche und ist auf Grund der notwendigen Höhe, die durch die verschiedenen elektrischen Lagen benötigt wird, nicht zu einer Integration in eine Scheibe geeignet.

Die DE 10 2011 004316 A1 offenbart eine Mehrbandantenne, die eine erste planare Teilantenne auf einem Träger umfasst, die abschnittsweise eine Kammstruktur aufweist. Die erste Teilantenne weist eine Apertur im Träger auf, wobei eine zweite Teilantenne so innerhalb der ersten Teilantenne gebildet ist, dass ihre Richtcharakteristik in Richtung der Aperturachse zeigt und zur Kommunikation in einem zweiten Frequenzband geeignet ist.

Die US 5872542 A offenbart eine Patch-Antenne, die eine Grundschicht, eine Zuleitungsschicht, eine Antennenschicht und ein transparentes Substrat aufweist. Die Antenne ist dazu geeignet hochfrequente Signal zu senden und empfangen.

Im Bereich des Schwarzdruckes der Scheibe sind aber nur wenige Orte für die Anbringung einer derartigen Antenne geeignet. Insbesondere die Bereitstellung am mittleren oberen Windschutzscheibenrand gestaltet sich schwierig, da dort häufig andere Sensoren, wie z.B. Regensensoren, verbaut sind, sodass dort kein Platz für weitere Elemente zur Verfügung steht. Die Bereitstellung im Bereich des Armaturenbrettes ist nachteilig, da hier nicht immer ausreichend Sicht auf einen oder mehrere Sender ist, insbesondere da andere Karosserieteile, wie z.B. das Fahrzeugdach, den empfangbaren Raumwinkelbereich aus Sicht einer dort platzierten Antenne stark einschränken. Des Weiteren können elektrisch leitfähige Schichten, wie infrarotreflektierende Schichten oder Low-E-Schichten, die Transmission elektromagnetischer Strahlung durch die Scheibe verhindern und den Empfang der gewünschten Signale beeinträchtigen. Solche Scheiben finden sich beispielsweise im Fahrzeugbau.

Ausgehend hiervon ist es eine Aufgabe der Erfindung, eine Fahrzeugscheibe bereitzustellen, in die eine Antenne sicher, zuverlässig und kostengünstig an weiteren Orten integriert werden kann.

Die Aufgabe wird gelöst durch eine Fahrzeugscheibe, aufweisend ein erstes Substrat und mindestens eine erste elektrisch leitende Schicht, wobei in der elektrisch leitenden Schicht eine Antennenstruktur gebildet ist, wobei die Antennenstruktur eine Vivaldiantennen-Struktur bereitstellt, wobei die Antennenstruktur zwei im Wesentlichen gleichartige Antennenelemente aufweist, wobei die zwei Antennenelemente unter einem Winkel zueinander angeordnet sind, wobei der Winkel größer als 0° und kleiner als 180° ist, sodass die Antennenelemente im Wesentlichen als eine Spiegelung an der Winkelhalbierenden erscheinen.

Mit der vorgestellten Anordnung ist es nunmehr möglich, nicht nur weitere Orte für eine Platzierung zu erschließen, ohne die Randbedingungen an die Sichtbarkeit zu verletzen, sondern es wird zudem ermöglicht, über breite Frequenzbereiche eine gute Empfangsleistung zur Verfügung zu stellen.

In einer Ausführungsform der Erfindung ist die Antennenstruktur zum Empfang von Signalen eines Mobilfunknetzes eingerichtet. Mobilfunknetze sind aufgrund der immer weiter schreitenden Vernetzung von Fahrzeugen und den Anforderungen an gesetzliche Bestimmungen, wie z.B. eCall, von besonderer Bedeutung. Dabei wird insbesondere in Mobilfunkkommunikationsnetzen eine Vielzahl von unterschiedlichen Frequenzbändern verwendet. Mit der beanspruchten Fahrzeugscheibe ist es nunmehr möglich für eine Zahl von Frequenzbändern verbesserte Empfangs- / Sendebedingungen zur Verfügung zu stellen.

Gemäß einer weiteren Ausführungsform der Erfindung ist die erste elektrisch leitende Schicht auf einer Folie angeordnet, die mit der Fahrzeugscheibe verbunden ist. Die Vorkonfektionierung auf einer Folie erlaubt eine besonders kostengünstige Herstellung.

Gemäß einer weiteren Ausführungsform der Findung ist der Winkel ausgewählt aus einem Winkelbereich von 120° bis 60°. D.h. durch Wahl des Winkels kann sowohl die Empfangs-Charakteristik in Bezug auf die empfangenen Frequenzbereiche als auch die Form an die Gegebenheiten der Fahrzeugscheibe angepasst werden.

In einer Ausführungsform der Erfindung ist die erste elektrisch leitende Schicht auf einer dielektrischen Folie aufgebracht. Die Aufbringung auf einer dielektrischen Folie ermöglicht es auch weitere Komponenten zu integrieren.

In einer Ausführungsform der Erfindung weist die Folie eine zweite elektrisch leitende Schicht, angeordnet auf der gegenüberliegenden Seite der ersten elektrisch leitenden Schicht, auf. Dadurch können zwei Komponenten auf der Folie integriert werden, wobei Messungen gezeigt haben, dass die Fahrzeugscheibe damit sehr gute Antenneneigenschaften aufweist. Dieses Ergebnis war für den Fachmann unerwartet und überraschend. Hierdurch können z.B. Streifenleiter / Wellenleiterstrukturen in verschiedenster Ausführung, z.B. als grounded co-planar waveguide, bereitgestellt werden.

In noch einer weiteren Ausführungsform der Erfindung weist die elektrisch leitende Schicht eine Höhe von 10 µm - 75 µm auf. Dies ermöglicht eine dünne Anordnung, die auch in eine Verbundscheibe integriert werden kann bzw. die auch an eine gebogene Oberfläche angepasst werden kann.

In einer weiteren Ausführungsform der Erfindung ist die Fahrzeugscheibe eine Verbundscheibe, wobei die Fahrzeugscheibe weiterhin ein zweites Substrat aufweist, wobei die Folie zwischen dem ersten Substrat und dem zweiten Substrat eingebracht ist. D.h., die Folie kann sowohl auf eine Scheibenaußenseite als auch zwischen Substraten einer Verbundscheibe eingebracht sein.

Gemäß noch einer weiteren Ausführungsform der Erfindung weist die Fahrzeugscheibe an zumindest einem Abschnitt am Rand der Fahrzeugscheibe einen Schwarzdruck (auch als Abdeckdruck bezeichnet) auf, der sich über eine Ecke der Fahrzeugscheibe erstreckt, wobei die erste elektrisch leitende Schicht zumindest abschnittsweise hinter dem Schwarzdruck angeordnet ist. Hiermit kann die Antennenanordnung unterhalb des Schwarzdruckes platziert sein, sodass die Antennenstruktur optisch unsichtbar bleibt und somit den ästhetischen Eindruck nicht stört, andererseits aber auch elektrisch wirksam bleibt.

Gemäß noch einer weiteren Ausführungsform der Erfindung weist die Antennenstruktur zumindest in einem ersten Frequenzband unter 1 GHz und zumindest in einem zweiten Frequenzband über 1 GHz einen Reflexions-Koeffizienten S₁₁ von -6 dB oder besser z.B. -15 dB auf. Damit kann in mehreren Frequenzbändern gleichzeitig eine hervorragende Empfangsleistung zur Verfügung gestellt werden.

Gemäß noch einer weiteren Ausführungsform der Erfindung ist die Antennenstruktur zum Empfang von Signalen eines drahtlosen Nahbereichs-Kommunikationsnetzes eingerichtet. D.h., die Erfindung kann z.B. auch für die Fahrzeug-zu-Fahrzeug-Kommunikation als auch für die Fahrzeug-zu-Infrastruktur-Kommunikation eingesetzt werden.

Gemäß einer weiteren Ausgestaltung der Erfindung wird ein Fahrzeug mit einer erfindungsgemäßen Glasscheibe, insbesondere ein Land-, See-, Luft- oder Raumfahrzeug, bereitgestellt.

Gemäß einer weiteren Ausgestaltung der Erfindung wird die Fahrzeugscheibe zum Empfang von Signalen eines Mobilkommunikationsnetzes der 1. Generation und/oder 2. Generation und/oder 3.Generation und/oder 4. Generation und/oder 5. Generation verwendet.

Gemäß einer weiteren Ausgestaltung der Erfindung wird die Fahrzeugscheibe zum Empfang von Signalen eines WLAN-Netzes und/oder Signalen eines Car-to-Car-Netzes und/oder Signalen eines Car-to-Infrastructure Netzes und/oder Bluetooth (auch Bluetooth Low Energy) verwendet.

Im Folgenden wird die Erfindung anhand von Zeichnungen und Ausführungsbeispielen näher erläutert. Die Figuren sind schematische Darstellungen und nicht maßstabsgetreu. Die Figuren schränken die Erfindung in keiner Weise ein.

Es zeigen:
- Fig. 1: eine schematische Übersicht in Bezug auf die Anordnung von Folien, Substrat(en) zur Verdeutlichung von Aspekten gemäß Stand der Technik und der Erfindung,
- Fig. 2: eine schematische Übersicht von möglichen Anbringungsorten von Antennenstrukturen gemäß Ausführungsformen der Erfindung,
- Fig. 3: eine schematische Aufsicht auf Antennenstrukturen in Ausführungsformen der Erfindung,
- Fig. 4: eine schematische Aufsicht auf ein virtuelles Teilelement einer Antennenstruktur in Ausführungsformen der Erfindung, und
- Fig. 5: ein S11 Diagramm in Bezug auf eine beispielhafte Antennen-Struktur in Ausführungsformen der Erfindung.

Nachfolgend wird die Erfindung eingehender unter Bezugnahme auf die Figuren dargestellt. Dabei ist anzumerken, dass unterschiedliche Aspekte beschrieben werden, die jeweils einzeln oder in Kombination zum Einsatz kommen können. D.h. jeglicher Aspekt kann mit unterschiedlichen Ausführungsformen der Erfindung verwendet werden, soweit nicht explizit als reine Alternative dargestellt. Soweit nachfolgend Verfahren beschrieben werden, sind die einzelnen Schritte eines Verfahrens in beliebiger Reihenfolge anordenbar und/oder kombinierbar, soweit sich durch den Zusammenhang nicht explizit etwas Abweichendes ergibt. Weiterhin sind die Verfahren - soweit nicht ausdrücklich anderweitig gekennzeichnet - untereinander kombinierbar. Angaben mit Zahlenwerten sind in aller Regel nicht als exakte Werte zu verstehen, sondern beinhalten auch eine Toleranz von +/- 1 % bis zu +/- 10 %. Soweit in dieser Anmeldung Normen, Spezifikationen oder dergleichen benannt werden, werden zumindest immer die am Anmeldetag anwendbaren Normen, Spezifikationen oder dergleichen in Bezug genommen. D.h. wird eine Norm / Spezifikation etc. aktualisiert oder durch einen Nachfolger ersetzt, so ist die Erfindung auch hierauf anwendbar.

In den Figuren sind verschiedene Ausführungsformen dargestellt.

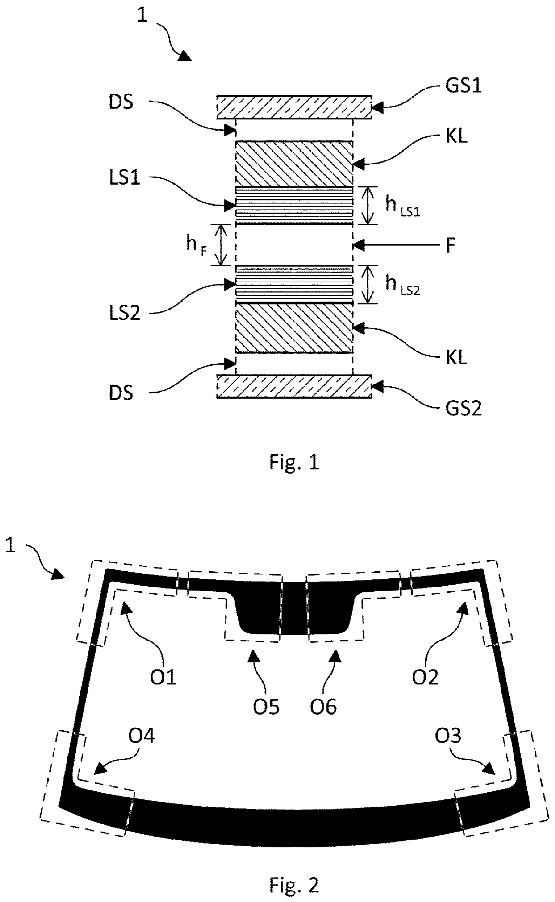

Eine erfindungsgemäße Fahrzeugscheibe 1 ist mit einer Vielzahl von Schichten im Schnitt in Figur 1 dargestellt. Dabei sind nicht alle dargestellten Schichten im nachfolgenden nötig.

Eine erfindungsgemäße Fahrzeugscheibe 1 weist ein erstes Substrat GS1 und mindestens eine erste elektrisch leitende Schicht LS1 auf. Das erste Substrat GS1 kann z.B. ein Glassubstrat oder ein Kunststoffsubstrat sein. Als Substrat sind im Grunde alle elektrisch isolierenden Substrate geeignet, die unter den Bedingungen der Herstellung und der Verwendung der erfindungsgemäßen Fahrzeugscheibe thermisch und chemisch stabil sind. Das erste Substrat GS1 enthält bevorzugt Flachglas, Floatglas, Quarzglas, Borosilikatglas, Kalk-Natron-Glas oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Die elektrisch leitende Schicht LS1 weist z.B. Kupfer, Silber, Gold oder Legierungen mit zumindest einem der vorgenannten Materialien auf.

In der elektrisch leitenden Schicht LS1 ist eine Antennenstruktur ANT1 gebildet. Dies kann z.B. durch Druck oder ablative mechanische und/oder chemische Verfahren bewerkstelligt sein und ist für das nähere Verständnis der Erfindung im Folgenden ohne Belang. Die Antennenstruktur ANT1 stellt eine vivaldiantennenartige Struktur bereit.

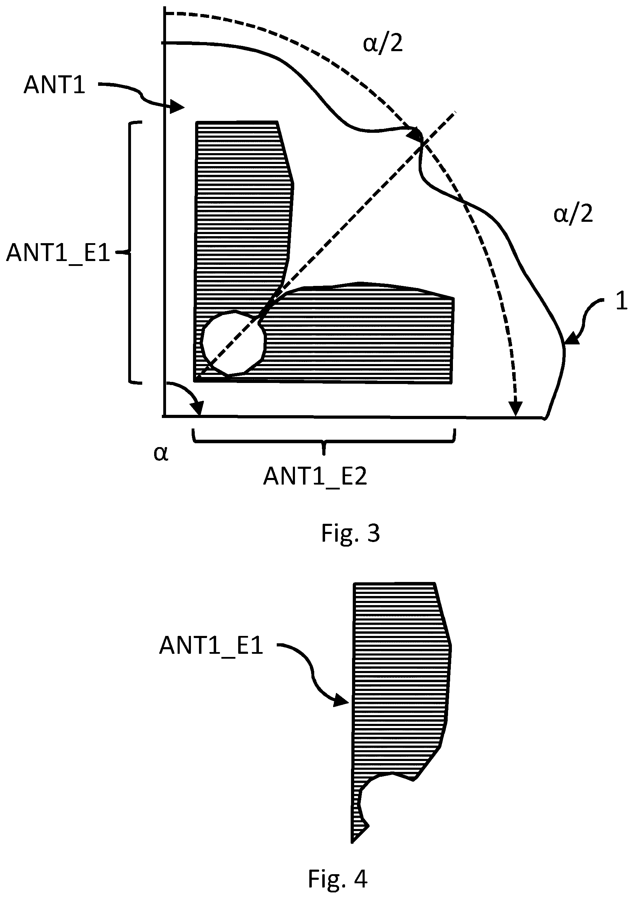

Vivaldiantennenartige Strukturen weisen in aller Regel einen trichterförmigen Abstrahlbereich und einen Impedanzanpassungsbereich (häufig eine kreisförmige Öffnung am Ende des Trichters) auf. Typischerweise wird auch noch eine Art Flaschenhals zwischen dem Impedanzanpassungsbereich und dem Trichter bereitgestellt, in dem häufig der Speisepunkt der Antenne angeordnet ist. Diese Antennenstruktur wird nun eingehender erläutert, wobei nachfolgend die Speisung der Antenne, d.h. die Anbindung an eine Antennenleitung nicht weiter erläutert wird. Beispielhafte Antennenleitungen können z.B. ein koplanarer Wellenleiter, insbesondere ein grounded co-planar waveguide sein. Nachfolgend wird in Zusammenhang mit Figur 3 und 4 die Struktur der Antenne ANT1 weiter erläutert.

Die Antennenstruktur kann "virtuell" in zwei Hälften, Antennenelemente ANT1_E1 und ANT1_E2, - wie in Figur 4 gezeigt - zerlegt werden, wobei die Antennenelemente ANT1_E1 und ANT1_E2 im Wesentlichen gleichartig sind. D.h. die Antennenelemente ANT1_E1, ANT1_E2 können als unter einem Winkel zueinander angeordnet angesehen werden, sodass die Antennenelemente ANT1_E1, ANT1_E2 im Wesentlichen als eine Spiegelung an der Winkelhalbierenden (dargestellt als gestrichelte Linie in Figur 3) erscheinen. Die im Wesentlichen gleichartige Ausgestaltung bezieht sich dabei darauf, dass eine vollständige Deckungsgleichheit nicht erzielt werden muss. Somit verbleiben z.B. noch Freiheitsgrade, um Anpassungen an das Umfeld der Fahrzeugscheibe, z.B. elektrisch leitende Fahrzeugteile bereitzustellen. In aller Regel kann davon ausgegangen werden, dass mindestens 75 % der Fläche, insbesondere 90 % der Fläche, deckungsgleich "virtuell" aufeinandergelegt werden können. Die vorbezeichnete Deckungsgleichheit kann durch "virtuelle" Spiegelung an einer Winkelhalbierenden α vorgenommen werden. In Figur 3 ist dieser Winkel α, den die Antennenelemente ANT1_E1 und ANT1_E2 einschließen, in etwa 90°. Ganz allgemein ist der Winkel α größer als 0° und kleiner als 180°. In einer bevorzugten Ausführungsform ist der Winkel ausgewählt aus einem Winkelbereich von 120° bis 60° und besonders bevorzugt aus einem Winkelbereich von 105° bis 75°.

Mit der vorgestellten Anordnung, die sich insbesondere durch die winkelige Anordnung auszeichnet, ist es nunmehr möglich nicht nur weitere Orte auf einer Fahrzeugscheibe für eine Platzierung zu erschließen, ohne die Randbedingungen an die Sichtbarkeit zu verletzen, sondern es wird zudem ermöglicht, über breite Frequenzbereiche eine gute Empfangsleistung zur Verfügung zu stellen. D.h. durch Wahl des Winkels kann sowohl die Empfangs-Charakteristik in Bezug auf die empfangenen Frequenzbereiche als auch die Form an die Gegebenheiten der Fahrzeugscheibe angepasst werden.

Gemäß einer Ausführungsform der Erfindung ist die Antennenstruktur ANT1 zum Empfang von Signalen eines Mobilfunknetzes eingerichtet. Mobilfunknetze sind auf Grund der immer weiter schreitenden Vernetzung von Fahrzeugen und den Anforderungen an gesetzliche Bestimmungen, wie z.B. eCall, von besonderer Bedeutung. Dabei wird insbesondere in Mobilfunkkommunikationsnetzen eine Vielzahl von unterschiedlichen Frequenzbändern verwendet. Mit der beanspruchten Fahrzeugscheibe ist es nunmehr möglich, für eine Zahl von Frequenzbändern verbesserte Empfangs- / Sendebedingungen zur Verfügung zu stellen.

In einer weiteren Ausführungsform ist die erste elektrisch leitende Schicht LS1 auf einer Folie F angeordnet, die mit der Fahrzeugscheibe verbunden ist. Insbesondere kann die Folie F zumindest ein Material ausgewählt aus der Gruppe aufweisend Polyimid, Polyurethan, Polymethylenmetacrylsäure, Polykarbonat, Polyethylenterephthalat, Polyvinylbutyral, FR6, Acrylnitril-butadien-Styrol- Copolymerisat, Polyethylen, Polypropylen, Polyvinylchlorid, Polystyrol, Polybutylenterephthalat, Polyamid aufweisen.

Ohne Beschränkung der Allgemeinheit können noch weitere Schichten - wie in Figur 1 angedeutet - vorgesehen sein. Auf der ersten elektrisch leitenden Schicht LS1 und/oder soweit vorhanden auf einer zweiten elektrisch leitenden Schicht LS2 kann optional eine Haftvermittlungsschicht KL aufgebracht sein. Diese Haftvermittlungsschicht KL kann z.B. eine Höhe von jeweils etwa 15 µm aufweisen. Die Haftvermittlungsschicht KL kann zumindest ein Material ausgewählt aus der Gruppe aufweisend Polyimid, Polyurethan, Polymethylenmetacrylsäure, Polykarbonat, Polyethylenterephthalat, Polyvinylbutyral, FR6, Acrylnitril-butadien-Styrol- Copolymerisat, Polyethylen, Polypropylen, Polyvinylchlorid, Polystyrol, Polybutylenterephthalat, Polyamid aufweisen.

Die Deckschicht DS kann z.B. ein Schwarzdruck sein, sodass Teile der Antennen-struktur ANT1 verdeckt bereitgestellt werden können, ohne den optischen Eindruck im Rest der Fahrzeugscheibe 1 zu beeinträchtigen. Die Deckschicht DS kann zwischen einem Substrat GS1, GS2, vorzugsweise dem zweiten Substrat GS2, und einer elektrisch leitenden Schicht LS1, LS2, vorzugsweise der zweiten elektrisch leitenden Schicht LS2, angeordnet sein. Andererseits kann die Deckschicht DS auch Polyimid aufweisen. Beispielsweise kann die Deckschicht DS eine Höhe von (jeweils) circa 25 µm aufweisen. Wird z.B. eine Folie mit Leiterschichten vorkonfektioniert so können die Leiterschichten LS1, LS2 vor Beschädigung beim Transport oder Konfektionieren oder Einbau oder Umwelteinflüssen geschützt werden. Dies ermöglicht eine dünne Anordnung, die auch in eine Verbundscheibe integriert werden kann bzw. die auch an eine gebogene Oberfläche angepasst werden kann.

In einer weiteren Ausführungsform der Erfindung ist die erste elektrisch leitende Schicht LS1 auf einer dielektrischen Folie F aufgebracht. Die Aufbringung auf einer dielektrischen Folie ermöglicht es auch weitere Komponenten zu integrieren.

In einer Ausführungsform der Erfindung weist die Folie F eine zweite elektrisch leitende Schicht LS2, angeordnet auf der gegenüberliegenden Seite der ersten elektrisch leitenden Schicht LS1 auf. Die elektrisch leitende Schicht LS2 weist z.B. Kupfer, Silber, Gold oder Legierungen mit zumindest einem der vorgenannten Materialien auf. Hierdurch können z.B. Streifenleiter / Wellenleiterstrukturen in verschiedenster Ausführung, z.B. als grounded co-planar waveguide, bereitgestellt werden.

In einer noch weiteren Ausführungsform der Erfindung weist die erste elektrisch leitende Schicht LS1 und/oder soweit vorhanden eine zweite elektrisch leitende Schicht LS2 eine Höhe h_{LS1}, h_{LS2} von 10 µm - 75 µm auf. Dies ermöglicht eine dünne Anordnung, die auch in eine Verbundscheibe integriert werden kann bzw. die auch an eine gebogene Oberfläche angepasst werden kann.

In einer weiteren Ausführungsform der Erfindung ist die Fahrzeugscheibe eine Verbundscheibe, wobei die Fahrzeugscheibe weiterhin ein zweites Substrat GS2 aufweist, wobei die Folie F zwischen dem ersten Substrat GS1 und dem zweiten Substrat GS2 eingebracht ist. Das zweite Substrat GS2 kann z.B. ein Glassubstrat oder ein Kunststoffsubstrat sein. Als Substrat sind im Grunde alle elektrisch isolierenden Substrate geeignet, die unter den Bedingungen der Herstellung und der Verwendung der erfindungsgemäßen Fahrzeugscheibe thermisch und chemisch stabil sind. Das zweite Substrat GS2 enthält bevorzugt Flachglas, Floatglas, Quarzglas, Borosilikatglas, Kalk-Natron-Glas oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. D.h., die Folie kann sowohl auf eine Scheibenaußenseite als auch zwischen Substraten einer Verbundscheibe eingebracht sein.

Gemäß noch einer weiteren Ausführungsform der Erfindung, welche beispielhaft in Figur 2 gezeigt ist, weist die Fahrzeugscheibe an zumindest einem Abschnitt am Rand der Fahrzeugscheibe einen Schwarzdruck auf, der sich über eine Ecke der Fahrzeugscheibe erstreckt, wobei die erste elektrisch leitende Schicht LS1 zumindest abschnittsweise hinter dem Schwarzdruck angeordnet ist. Beispielsweise kann die vordefinierte Antennenstruktur an den Orten O1, O2, O3, O4, O5 oder O6 platziert sein, wobei die Orte beispielhaft gewählt sind und keine abschließende Aufzählung darstellen. D.h. durch die winkelige Ausgestaltung kann die Antennenstruktur ANT1 insbesondere an Ecken (insbesondere in Ecken eines Schwarzdruckes) platziert werden. Hiermit kann die Antennenanordnung unterhalb des Schwarzdruckes platziert sein, sodass die Antennen-struktur optisch unsichtbar bleibt und somit den ästhetischen Eindruck nicht stört, andererseits aber auch elektrisch wirksam bleibt. Ohne Beschränkung der Allgemeinheit können auch mehrere solcher Antennenstrukturen ANT1 in einer Fahrzeugscheibe 1 an unterschiedlichen Orten O1 bis O6 angeordnet sein. Dabei ist es auch möglich, diese durch geeignete Verschaltungen so zusammenzuführen, dass beispielsweise auch zirkular polarisierte Signale empfangen werden können.

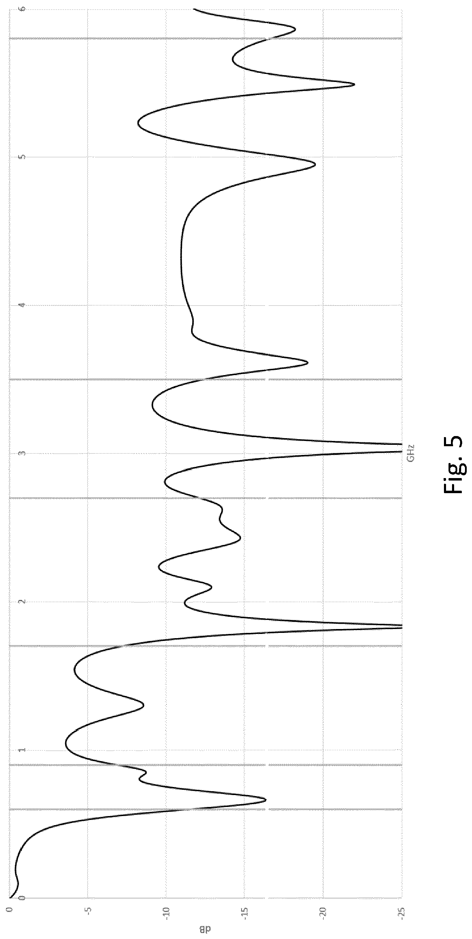

Gemäß noch einer weiteren Ausführungsform der Erfindung weist die Antennenstruktur ANT1 zumindest in einem ersten Frequenzband unter 1 GHz und zumindest in einem zweiten Frequenzband über 1 GHz einen Reflexions-Koeffizienten S₁₁ von -6 dB oder besser, z.B. -15 dB oder besser, auf. Beispielhaft sei auf Figur 5 verwiesen. Dabei sei angemerkt, dass die Erfindung natürlich auch durch Anpassung auf andere Frequenzbänder z.B. ein zweites Frequenzband unter 2 GHz und ein drittes Frequenzband über 2 GHz einen Reflektions-Koeffizienten S₁₁ von -6 dB oder besser, z.B. -15 dB oder besser, alternativ oder zusätzlich eingestellt werden könnte. Beispielhafte Frequenzbänder sind das bisherige UMTS-Band bei 900 MHz bzw. 1800 MHz, die 700 MHz, 800 MHz, 1500 MHz und 2600 MHZ und 3.5 GHz und 3,7 GHz LTE Bänder als auch zukünftige 26 GHz und 60 GHz LTE Bänder.

In einer Ausführungsform der Erfindung ist die Antennenstruktur ANT1 zum Empfang von Signalen eines drahtlosen Nahbereichs-Kommunikationsnetzes eingerichtet. Beispielhafte Frequenzbänder sind das 2,4 GHz / 5 GHz und 60 GHz WLAN-Band. D.h., die Erfindung kann z.B. auch für die Fahrzeug-zu-Fahrzeug-Kommunikation als auch für die Fahrzeug-zu-Infrastruktur-Kommunikation eingesetzt werden, für welche zur Zeit Frequenzen im Bereich von 5,9 GHz favorisiert werden.

Gemäß einer weiteren Ausgestaltung der Erfindung wird ein Fahrzeug mit einer erfindungsgemäßen Glasscheibe, insbesondere ein Land-, See-, Luft- oder Raumfahrzeug, bereitgestellt.

Gemäß einer weiteren Ausgestaltung der Erfindung wird die Fahrzeugscheibe zum Empfang von Signalen eines Mobilkommunikationsnetzes der 1. Generation und/oder 2. Generation und/oder 3.Generation und/oder 4. Generation und/oder 5. Generation verwendet.

Gemäß einer weiteren Ausgestaltung der Erfindung wird die Fahrzeugscheibe zum Empfang von Signalen eines WLAN-Netzes und/oder Bluetooth (auch Bluetooth Low Energy) und/oder Signalen eines Car-to-Car-Netzes und/oder Signalen eines Car-to-Infrastructure Netzes verwendet.

### Bezugszeichenliste

- 1: Fahrzeugscheibe
- GS1: Substrat
- GS2: Substrat
- F: Folie
- LS1: elektrisch leitende Schicht
- LS2: elektrisch leitende Schicht
- ANT1: Antennenstruktur
- ANT1_E1: Antennenelement
- ANT1_E2: Antennenelement
- h_{LS1}: Höhe
- h_{LS2}: Höhe
- DS: (elektrisch isolierende) Deckschicht
- KL: Haftvermittlungsschicht
- O1... O6: Anbringungsorte

## Patentansprüche

1. Fahrzeugscheibe, aufweisend ein erstes Substrat (GS1) und mindestens eine erste elektrisch leitende Schicht (LS1),
- wobei in der elektrisch leitenden Schicht (LS1) eine Antennenstruktur (ANT1) gebildet ist,
- wobei die Antennenstruktur (ANT1) eine Vivaldiantennen-Struktur bereitstellt,
**dadurch gekennzeichnet, dass**
- die Antennenstruktur (ANT1) zwei im Wesentlichen gleichartige Antennenelemente (ANT1_E1, ANT1_E2) aufweist,
- die zwei Antennenelemente (ANT1_E1, ANT1_E2) unter einem Winkel zueinander angeordnet sind,
- der Winkel größer als 0° und kleiner als 180° ist, sodass die Antennenelemente (ANT1_E1, ANT1_E2) im Wesentlichen als eine Spiegelung an der Winkelhalbierenden erscheinen.

2. Fahrzeugscheibe nach Anspruch 1, **dadurch gekennzeichnet, dass** die Antennenstruktur (ANT1) zum Empfang von Signalen eines Mobilfunknetzes eingerichtet ist.

3. Fahrzeugscheibe nach Anspruch 1 oder 2, **dadurch gekennzeichnet, dass** die erste elektrisch leitende Schicht (LS1) auf einer Folie (F) angeordnet ist, die mit der Fahrzeugscheibe verbunden ist.

4. Fahrzeugscheibe nach einem der vorhergehenden Ansprüche, **dadurch gekennzeichnet, dass** der Winkel ausgewählt ist aus einem Winkelbereich von 120° bis 60°.

5. Fahrzeugscheibe nach einem der vorhergehenden Ansprüche, **dadurch gekennzeichnet, dass** die erste elektrisch leitende Schicht (LS1) auf einer dielektrischen Folie (F) aufgebracht ist.

6. Fahrzeugscheibe nach Anspruch 5, **dadurch gekennzeichnet, dass** die Folie (F) eine zweite elektrisch leitende Schicht (LS2) angeordnet auf der gegenüberliegenden Seite der ersten elektrisch leitenden Schicht (LS1) aufweist.

7. Fahrzeugscheibe nach einem der vorhergehenden Ansprüche, **dadurch gekennzeichnet, dass** die erste elektrisch leitende Schicht (LS1) eine Höhe (h_{LS1}) von 10 µm - 75 µm aufweist.

8. Fahrzeugscheibe nach einem der vorhergehenden Ansprüche 3 bis 7, **dadurch gekennzeichnet, dass** die Fahrzeugscheibe eine Verbundscheibe ist, wobei die Fahrzeugscheibe weiterhin ein zweites Substrat (GS2) aufweist, wobei die Folie (F) zwischen dem ersten Substrat (GS1) und dem zweiten Substrat (GS2) eingebracht ist.

9. Fahrzeugscheibe nach einem der vorhergehenden Ansprüche, **dadurch gekennzeichnet, dass** die Fahrzeugscheibe an zumindest einem Abschnitt am Rand der Fahrzeugscheibe einen Schwarzdruck aufweist, der sich über eine Ecke der Fahrzeugscheibe erstreckt, wobei die erste elektrisch leitende Schicht (LS1) zumindest abschnittsweise hinter dem Schwarzdruck angeordnet ist.

10. Fahrzeugscheibe nach einem der vorhergehenden Ansprüche, **dadurch gekennzeichnet, dass** die Antennenstruktur (ANT1) zum Empfang von Signalen eines drahtlosen Nahbereichs-Kommunikationsnetzes eingerichtet ist.

11. Fahrzeug mit einer Fahrzeugscheibe nach einem der vorhergehenden Ansprüche.

12. Verwendung einer Fahrzeugscheibe nach einem der vorhergehenden Ansprüche 1 bis 10, zum Empfang von Signalen eines Mobilkommunikationsnetzes der 1. Generation und/oder 2. Generation und/oder 3.Generation und/oder 4. Generation und/oder 5. Generation.

13. Verwendung einer Fahrzeugscheibe nach Anspruch 10, zum Empfang von Signalen eines WLAN-Netzes und/oder Signalen eines Car-to-Car-Netzes und/oder Signalen eines Car-to-Infrastructure Netzes.

## Claims

1. Vehicle pane having a first substrate (GS1) and at least one first electrically conducting layer (LS1),
- wherein an antenna structure (ANT1) is formed in the electrically conducting layer (LS1),
- wherein the antenna structure (ANT1) provides a Vivaldi-antenna structure,
**characterized in that**
- the antenna structure (ANT1) has two substantially identical antenna elements (ANT1_E1, ANT1_E2),
- the two antenna elements (ANT1_E1, ANT1_E2) are arranged at an angle relative to one another,
- the angle is greater than 0° and less than 180° such that the antenna elements (ANT1_E1, ANT1_E2) appear substantially as mirror images at the angle bisector.

2. Vehicle pane according to claim 1, **characterized in that** the antenna structure (ANT1) is set up to receive signals of a mobile radio network.

3. Vehicle pane according to claim 1 or 2, **characterized in that** the first electrically conducting layer (LS1) is arranged on a film (F) that is connected to the vehicle pane.

4. Vehicle pane according to one of the preceding claims, **characterized in that** the angle is selected from an angle range of 120° to 60°.

5. Vehicle pane according to one of the preceding claims, **characterized in that** the first electrically conducting layer (LS1) is applied on a dielectric film (F).

6. Vehicle pane according to claim 5, **characterized in that** the film (F) has a second electrically conducting layer (LS2) arranged on the opposite side of the first electrically conducting layer (LS1).

7. Vehicle pane according to one of the preceding claims, **characterized in that** the first electrically conducting layer (LS1) has a height (h_{LS1}) of 10 µm - 75 µm.

8. Vehicle pane according to one of the preceding claims 3 through 7, **characterized in that** the vehicle pane is a laminated pane, wherein the vehicle pane further has a second substrate (GS2), wherein the film (F) is introduced between the first substrate (GS1) and the second substrate (GS2).

9. Vehicle pane according to one of the preceding claims, **characterized in that** the vehicle pane has a black imprint on at least one section at the edge of the vehicle pane, which imprint extends over a corner of the vehicle pane, wherein the first electrically conducting layer (LS1) is arranged behind the black imprint, at least in some sections.

10. Vehicle pane according to one of the preceding claims, **characterized in that** the antenna structure (ANT1) is set up to receive signals of a wireless short-range communication network.

11. Vehicle with a vehicle pane according to one of the preceding claims.

12. Use of a vehicle pane according to one of the preceding claims 1 through 10, to receive signals of a mobile communication network of the first generation, and/or 2G and/or 3G and/or 4G and/or 5G.

13. Use of a vehicle pane according to claim 10, to receive signals of a WLAN network and/or signals of a car-to-car network and/or signals of a car-to-infrastructure network.

## Revendications

1. Vitrage de véhicule comportant un premier substrat (GS1) et au moins une première couche électriquement conductrice (LS1),
- dans laquelle une structure d'antenne (ANT1) est formée dans la couche électriquement conductrice (LS1),
- dans laquelle la structure d'antenne (ANT1) fournit une structure d'antenne Vivaldi,
**caractérisée en ce que**
- la structure d'antenne (ANT1) comporte deux éléments d'antenne (ANT1_E1, ANT1_E2) sensiblement identiques,
- les deux éléments d'antenne (ANT1_E1, ANT1_E2) sont disposés à un angle l'un par rapport à l'autre,
- l'angle est supérieur à 0° et inférieur à 180°, de sorte que les éléments d'antenne (ANT1_E1, ANT1_E2) apparaissent sensiblement comme des images miroir au niveau de la bissectrice.

2. Vitrage de véhicule selon la revendication 1, **caractérisé en ce que** la structure d'antenne (ANT1) est conçue pour recevoir des signaux d'un réseau de radiocommunication mobile.

3. Vitrage de véhicule selon la revendication 1 ou 2, **caractérisé en ce que** la première couche électriquement conductrice (LS1) est disposée sur un film (F) qui est relié au vitrage du véhicule.

4. Vitrage de véhicule selon l'une des revendications précédentes, **caractérisé en ce que** l'angle est choisi dans une plage d'angles comprise entre 120° et 60°.

5. Vitrage de véhicule selon l'une des revendications précédentes, **caractérisé en ce que** la première couche électriquement conductrice (LS1) est appliquée sur un film diélectrique (F).

6. Vitrage de véhicule selon la revendication 5, **caractérisé en ce que** le film (F) comporte une deuxième couche électriquement conductrice (LS2) disposée sur le côté opposé à la première couche électriquement conductrice (LS1).

7. Vitrage de véhicule selon l'une des revendications précédentes, **caractérisé en ce que** la première couche électriquement conductrice (LS1) a une hauteur (h_{LS1}) comprise entre 10 µm et 75 µm.

8. Vitrage de véhicule selon l'une des revendications 3 à 7 précédentes, **caractérisée en ce que** le vitrage de véhicule est un vitrage feuilleté, dans lequel le vitrage de véhicule comporte en outre un deuxième substrat (GS2), dans lequel le film (F) est introduit entre le premier substrat (GS1) et le deuxième substrat (GS2).

9. Vitrage de véhicule selon l'une des revendications précédentes, **caractérisé en ce que** le vitrage de véhicule comporte une impression noire sur au moins une section au bord du vitrage de véhicule, laquelle impression s'étend sur un coin du vitrage de véhicule, la première couche électriquement conductrice (LS1) étant disposée derrière l'impression noire, au moins dans certaines sections.

10. Vitrage de véhicule selon l'une des revendications précédentes, **caractérisée en ce que** la structure d'antenne (ANT1) est configurée pour recevoir des signaux d'un réseau de communication sans fil à courte portée.

11. Véhicule avec un vitrage de véhicule selon l'une des revendications précédentes.

12. Utilisation d'un vitrage de véhicule selon l'une des revendications 1 à 10 précédentes, pour recevoir des signaux d'un réseau de communication mobile de première génération, et/ou 2G et/ou 3G et/ou 4G et/ou 5G.

13. Utilisation d'un vitrage de véhicule selon la revendication 10, pour recevoir des signaux d'un réseau WLAN et/ou des signaux d'un réseau de communication entre véhicules et/ou des signaux d'un réseau de communication entre véhicules et infrastructures.
